# EUROPÄISCHE PATENTANMELDUNG

(11) **EP 1 674 721 A1**
(43) Veröffentlichungstag der Anmeldung: **28.06.2006**
(21) Anmeldenummer: 05027250.9
(22) Anmeldetag: 14.12.2005
(51) Int. Cl.: F02P 23/04, G02B 13/18

(54) **Linse für einen lasergezündeten Verbrennungsmotor**

(30) Priorität: 20.12.2004 AT 21222004
(71) Anmelder: GE Jenbacher GmbH & Co OHG, 6200 Jenbach (AT)
(72) Erfinder: Kopecek, Herbert, 85399 Halbergmoos (DE); Francesconi, Christian, 8605 Kapfenberg (AT); Wintner, Ernst, 2295 Oberweiden (AT); Weinrotter, Martin, 4840 Vöcklabruck (AT); Klausner, Johann, 6391 St. Jakob im Haus (AT)
(74) Vertreter: Hofinger, Stephan

(57) **Zusammenfassung**

Linse für einen lasergezündeten Verbrennungsmotor mit einer wenigstens annähernd sphärischen Grundform, wobei die Linse (1) einen asphärischen Bereich (3) aufweist, der derart ausgebildet ist, dass die Linse (1) wenigstens annähernd frei von sphärischer Aberration ist.

## Beschreibung

Die vorliegende Erfindung betrifft eine Linse für einen lasergezündeten Verbrennungsmotor mit einer wenigstens annähernd sphärischen Grundform.

Eine derartige Linse geht beispielsweise aus der US 6,053,140 hervor. Problematisch ist bei dieser Linse die relativ schlechte Abbildungsqualität.

Aufgabe der Erfindung ist es, eine einfache fokussierende Optik für die zur Zündung eingesetzte Laserstrahlung zu schaffen, welche die Probleme des Standes der Technik nicht aufweist.

Dies wird erfindungsgemäß dadurch erreicht, dass die Linse einen asphärischen Bereich aufweist, der derart ausgebildet ist, dass die Linse wenigstens annähernd frei von sphärischer Aberration ist.

Die sich an eine Kugel annähernde Gesamtform der Linse garantiert höchste mechanische Widerstandsfähigkeit gegen die in einem Verbrennungsmotor vorherrschenden rauen Bedingungen durch die Verbrennung, den Zylinderdruck und die mechanische Einspannung. Gleichzeitig sorgt der asphärische Bereich der Linse für bestmögliche Abbildungseigenschaften der Optik und damit für einen kleinstmöglichen Fokus, was wiederum die minimal benötigte Laserenergie für eine zuverlässige Entzündung des Kraftstoff-Luft-Gemisches auf ein Mindestmaß absenkt und die Effizienz des gesamten Zündsystems erhöht. Beim Einsatz der erfindungsgemäßen Linse werden an sich keine weiteren optischen Elemente im Bereich der Fokussieroptik benötigt. Beispielsweise können aber Kollimier- und Aufweitelinsen vorgesehen sein, die den Strahl auf den Durchmesser, auf welchen das Kugelfenster dimensioniert worden ist, zu ändern.

Bei einer vorteilhaften Ausführungsform der Erfindung ist vorgesehen, dass der asphärische Bereich in Bezug auf eine gedachte, durch den Mittelpunkt der sphärischen Grundform verlaufende Achse drehsymmetrisch ausgebildet ist. Dies ermöglicht eine besonders einfache Fertigung und garantiert gleichzeitig gute Abbildungseigenschaften der Linse. Bei einer derartigen Linse ist vorzugsweise vorgesehen, dass sich der asphärische Bereich in Bezug auf die gedachte Achse vom Polwinkel θ = 0° bis wenigstens etwa θ = 45° erstreckt. Sollen auch größere Strahldurchmesser eingesetzt werden können, kann vorzugswelse vorgesehen sein, dass sich der asphärische Bereich bis etwa θ = 90° erstreckt.

Ganz allgemein kann bei einer erfindungsgemäßen Linse besonders bevorzugt vorgesehen sein, dass wenigstens in einem Teilbereich des asphärischen Bereichs für jeden Punkt auf der Oberfläche des Teilbereiches der Abstand zum Mittelpunkt der sphärischen Grundform verschieden vom Radius der sphärischen Grundform ist. Hierbei kann weiters vorgesehen sein, dass der Teilbereich, in dem der Abstand eines Punktes auf der Oberfläche vom Radius der sphärischen Grundform abweicht, in Bezug auf eine gedachte, durch den Mittelpunkt der sphärischen Grundform verlaufenden Achse drehsymmetrisch ausgebildet ist.

Bei einer weiteren vorteilhaften Ausführungsform der Erfindung kann vorgesehen sein, den zum asphärischen Bereich auf der sphärischen Grundform in Bezug auf den Mittelpunkt entgegengesetzt angeordneten Bereich (Antipode) wenigstens annähernd plan, konkav oder konvex auszubilden. Durch diese Maßnahme können etwaige Abbildungsfehler Zusätzlich reduziert werden.

Eine besonders einfache Ausführungsform der erfindungsgemäßen Linsen ergibt sich, wenn vorgesehen ist, dass der asphärische Bereich auf der Oberfläche der Linse einfach zusammenhängend ausgebildet ist. Im Gegensatz zu einer durchaus denkbaren Ausbildung des asphärischen Bereichs in Form von zwei oder mehreren, voneinander auf der Oberfläche der Linse beabstandeten asphärischen Teilbereichen zeichnet sich ein einfach zusammenhängender asphärischer Bereich durch eine leichtere Fertigung aus.

Als Materialien für die erfindungsgemäße Linse bieten sich beispielsweise Gläser, aber auch polykristalline Materialien an. Beispielsweise können vorzugsweise hochreines Quarzglas, kristalliner Quarz, Kalziumfluorid, Borosilikatglas, Kieselglas oder Saphir eingesetzt werden.

Die vorliegende Erfindung betrifft auch ein Verfahren zum Herstellen einer erfindungsgemäßen Linse.

Eine derartige Linse kann beispielsweise dadurch hergestellt werden, dass in eine annähernd kugelförmige Rohlinse der asphärische Bereich eingearbeitet, vorzugsweise eingeschliffen wird.

Auch ist es denkbar, dass das Rohmaterial in einer Pressform, die zur erzielenden Form der Linse komplementär ist, gepresst wird. Dies erlaubt die Herstellung einer erfindungsgemäßen Linse in einem einzigen Arbeitsgang.

Ein weiterer Aspekt der Erfindung betrifft eine Aufnahme für eine erfindungsgemäße Linse, die sich dadurch auszeichnet, dass sie Sitzflächen aufweist, die zur spielfreien Lagerung der Linse ausgebildet sind und dass sie zur Montage in einer vorzugsweise zylindrischen Bohrung im Zylinderkopf eines Verbrennungsmotor ausgebildet ist.

Vorzugsweise ist die Aufnahme aus einem für den Einsatz in einem Verbrennungsmotor geeignetem Metall gefertigt.

Besonders vorteilhaft ist es, wenn vorgesehen ist, dass die erfindungsgemäße Aufnahme einen Hohlzylinder und eine am Hohlzylinder lösbar befestigte, vorzugsweise aufgesteckte Hülse umfasst, wobei die Linse zwischen Hohlzylinder und aufgesteckter Hülse anordenbar ist. Dies ermöglicht eine einfache Befestigung der Linse. Besonders vorteilhaft ist es, wenn weiter vorgesehen ist, dass der Hohlzylinder an einem Ende Sitzflächen aufweist, die komplementär zu einem Abschnitt des asphärischen Bereichs der Linse ausgebildet sind und die Hülse Sitzflächen aufweist, die komplementär zu einem Abschnitt der sphärischen Grundform der Linse ausgebildet sind. Die Linse kann in diesem Fall im Adapter durch Verpressen befestigt werden.

Die Erfindung betrifft weiters einen Zylinderkopf mit einer Aufnahme der vorgenannten Art, wobei in der der Aufnahme eine erfindungsgemäße Linse angeordnet ist.

Besonders bevorzugt ist dabei vorgesehen, dass die Linse gleichzeitig als Brennraumfenster eingesetzt wird. Dies ermöglicht es, die vor einer am oder in der Nähe des Verbrennungsmotors zum jeweiligen Zylinderkopf geführte Laserstrahlung nur unter Einsatz einer einzigen erfindungsgemäßen Linse fokussiert in den Brennraum des Verbrennungsmotors einzubringen.

Hierbei ist es besonders vorteilhaft, wenn die brennraumseitige Oberfläche der Linse möglichst in den Brennraum hineinragt bzw. zumindest mit der Zylinderkopfunterseite und der Adapterunterseite einigermaßen plan abschließt, um möglichst hohe Oberflächentemperaturen an der Linse zu erzielen und so Fensterablagerungen zu vermeiden. Die sphärische Grundform der Linse begünstigt solche vorgezogenen Brennraumiagen bei gleichzeitiger Vermeidung von Abstufungen oder Sockel die, wie Versuche der Anmelderin gezeigt haben, zu Kerbspannungsrissen führen können.

Weitere Vorteile und Einzelheiten der Erfindung ergeben sich anhand der nachfolgenden Figuren sowie der dazugehörigen Figurenbeschreibung.

Dabei zeigen
- Fig. 1: einen Schnitt durch einen Zylinderkopf mit einer erfindungsgemäßen Aufnahme und einer erfindungsgemäßen Linse,
- Fig. 2: einen weiteren Schnitt durch einen Zylinderkopf, wobei ein weiteres Ausführungsbeispiel der erfindungsgemäßen Linse zu erkennen ist und
- Fig. 3: einen weiteren Schnitt durch einen Zylinderkopf, wobei ein weiteres Ausführungsbeispiel der erfindungsgemäßen Linse zu erkennen ist.

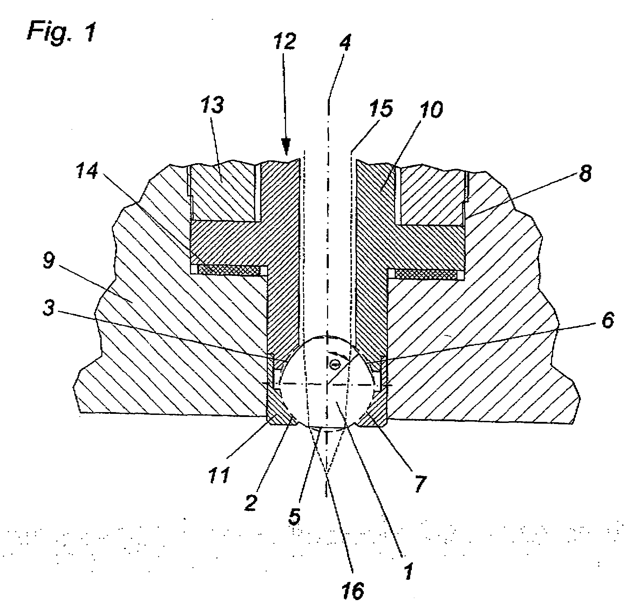

Fig. 1 zeigt in einer schematischen Schnittdarstellung die Unterseite eines Zylinderkopfs 9, welcher eine annähernd zylindrische Bohrung 8 aufweist. In die Bohrung 8 ist eine erfindungsgemäße Aufnahme 12 eingesetzt und über eine geeignete Fixierung 13 sowie eine Dichtung 14 befestigt bzw. abgedichtet.

Zu erkennen ist weiters, dass in diesem Ausführungsbeispiel die Aufnahme 12 zweiteilig ausgeführt ist, wobei der erste Teil aus einem Hohlzylinder 10 und der zweite Teil aus einer Hülse 11 (Presshülse) besteht. Die Hülse 11 ist auf ein Ende des Hohlzylinders 10 aufgesteckt und verpresst so die zwischen Hohlzylinder 10 und Hülse 11 angeordnete, als Brennraumfenster fungierende erfindungsgemäße Linse 1 zwischen den Dichtflächen 6 am Hohlzylinder 10 und den Dichtflächen 7 an der Hülse 11. Die Dichtflächen 6, 7 sind dabei komplementär zum jeweiligen Abschnitt der Linse 1 ausgebildet. In diesem Ausführungsbeispiel sind daher die Sitzflächen 6 komplementär zum asphärischen Bereich 3 der Linse 1 ausgebildet, während die Sitzflächen 7 komplementär zur sphärischen Grundform 2 der Linse 1 ausgebildet sind. Die erfindungsgemäße Linse 1 ist bezüglich der Achse 4 drehsymmetrisch ausgeführt, wobei sich der asphärische Bereich 3, welcher zur Vermeidung von sphärischer Aberration ausgebildet ist, bis annähernd zur Äquatorebene der Linse 1 erstreckt. Wie dem Fachmann allgemein bekannt ist, betrifft die sphärische Aberration vor allem achsenferne Strahlen, sodass die Abweichung von der sphärischen Grundform 2 umso ausgeprägter ist, je größer der Polwinkel θ ist. Der dem asphärischen Bereich 3 annähernd entgegengesetzt angeordnete Bereich 5 der Linse 1 ist in diesem Ausführungsbeispiel plan ausgebildet. Die Linse 1 steht mit diesem Bereich über die Unterseite des Zylinderkopfs 9 sowie der Hülse 11 hervor, wodurch im Betrieb des Verbrennungsmotors eine Umspülung durch die im Brennraum befindlichen Verbrennungsgase garantiert wird, was die Fensterablagerungen vermindert.

Die von einer nicht dargestellten Laserquelle erzeugte und über nicht dargestellte Mittel (z.B. Lichtleiter) in den Zylinderkopf eingebrachte Laserstrahlung 15 wird allein durch die erfindungsgemäße Linse 1 im Brennraum auf einen Brennpunkt 16 fokussiert.

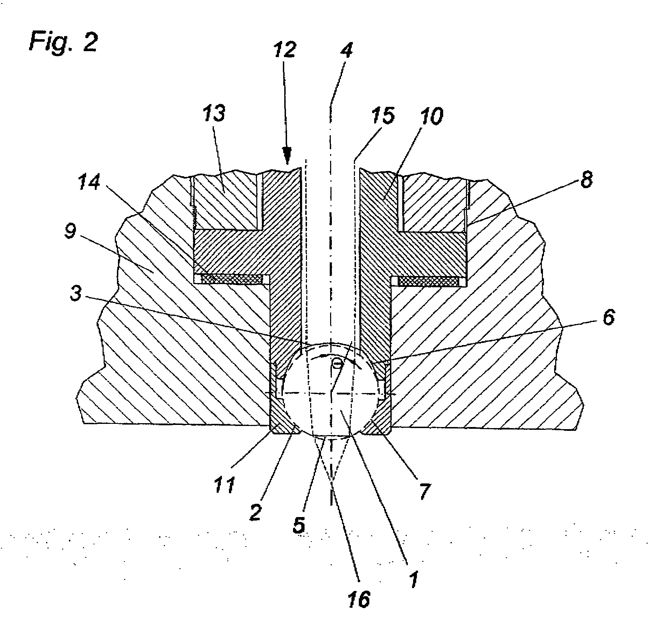

Fig. 2 unterscheidet sich von Fig. 1 dadurch, dass die Linse 1 in diesem Ausführungsbeispiel einen asphärischen Bereich 3 aufweist, bei dem für jeden Punkt auf der Oberfläche des asphärischen Bereichs 3 der Abstand zum Mittelpunkt M der Linse 1 größer ist als der Radius R der Linse.

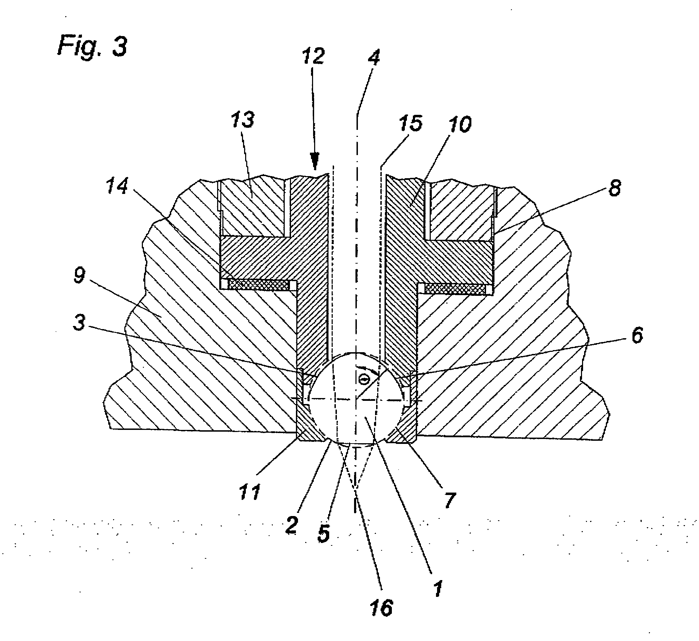

In Fig. 3 ist ein weiteres Ausführungsbeispiel einer erfindungsgemäßen Linse 1 dergestellt. Ebenso wie in Fig. 1 ist im asphärischen Bereich 3 (bis auf den achsennahen Bereich θ ~ 0°) der Abstand von jedem Punkt auf der Oberfläche kleiner als der Radius R der sphärischen Grundform 2 der Linse 1.

Anders als in den Ausführungsbeispielen nach Fig. 1 bis 3 gezeigt, kann der asphärische Bereich 3 auch auf der dem Brennraum zugewandten Seite der Linse 1 angeordnet sein, z.B. anstelle der in den Fig. 1 - 3 gezeigten Abflachung (Bereich 5). Durch diese Maßnahme kann eine höhere numerische Apertur erreicht und so eine niedrigere Zündenergie erzielt werden.

## Patentansprüche

1. Linse für einen lasergezündeten Verbrennungsmotor mit einer wenigstens annähernd sphärischen Grundform, **dadurch gekennzeichnet, dass** die Linse (1) einen asphärischen Bereich (3) aufweist, der derart ausgebildet ist, dass die Linse (1) wenigstens annähernd frei von sphärischer Aberration ist.

2. Linse nach Anspruch 1, **dadurch gekennzeichnet, dass** der asphärische Bereich (3) in Bezug auf eine gedachte, durch den Mittelpunkt der sphärischen Grundform (2) verlaufende Achse (4) drehsymmetrisch ausgebildet ist.

3. Linse nach Anspruch 2, **dadurch gekennzeichnet, dass** sich der asphärische Bereich (3) in Bezug auf die gedachte Achse (4) vom Polwinkel θ = 0° bis wenigstens etwa θ = 45° erstreckt.

4. Linse nach Anspruch 3, **dadurch gekennzeichnet, dass** sich der asphärische Bereich (3) bis etwa θ = 90° erstreckt.

5. Linse nach einem der Ansprüche 1 bis 4, **dadurch gekennzeichnet, dass** wenigstens in einem Teilbereich des asphärischen Bereichs (3) für jeden Punkt auf der Oberfläche des Teilbereichs der Abstand zum Mittelpunkt der sphärischen Grundform (2) kleiner ist als der Radius (R) der sphärischen Grundform (2).

6. Linse nach einem der Ansprüche 1 bis 4, **dadurch gekennzeichnet, dass** wenigstens in einem Teilbereich des asphärischen Bereichs (3) für jeden Punkt auf der Oberfläche des Teilbereichs der Abstand zum Mittelpunkt der sphärischen Grundform (2) größer ist als der Radius (R) der sphärischen Grundform (2).

7. Linse nach Anspruch 5 oder 6, **dadurch gekennzeichnet, dass** der Teilbereich, in dem der Abstand eines Punktes auf der Oberfläche vom Radius (R) der sphärischen Grundform (2) abweicht, in Bezug auf eine gedachte, durch den Mittelpunkt der sphärischen Grundform (2) verlaufenden Achse (4) drehsymmetrisch ausgebildet ist.

8. Linse nach einem der Ansprüche 1 bis 7, **dadurch gekennzeichnet, dass** sie im Bereich der Antipode (5) zum asphärischen Bereich (3) wenigstens annähernd plan, konkav oder konvex ausgebildet ist.

9. Linse nach einem der Ansprüche 1 bis 8, **dadurch gekennzeichnet, dass** der asphärische Bereich (3) auf der Oberfläche der Linse (1) einfach zusammenhängend ausgebildet ist.

10. Linse nach einem der Ansprüche 1 bis 9, **dadurch gekennzeichnet, dass** sie aus - vorzugsweise hochreinem - Quarzglas, kristallinem Quarz; Kalziumfluorid, Borosilikatglas, Kieselglas oder Saphir besteht.

11. Verfahren zum Herstellen einer Linse nach einem der Ansprüche 1 bis 10, **dadurch gekennzeichnet, dass** in eine annähernd kugelförmige Rohilinse der asphärische Bereich (3) eingearbeitet, vorzugsweise eingeschliffen wird.

12. Verfahren zum Herstellen einer Linse nach einem der Ansprüche 1 bis 10, **dadurch gekennzeichnet, dass** das Rohmaterial in einer Pressform, die zur erzielenden Form der Linse (1) komplementär ist, gepresst wird.

13. Aufnahme für eine Linse nach einem der Ansprüche 1 bis 10, **dadurch gekennzeichnet, dass** sie Sitzflächen (6, 7) aufweist, die zur spielfreien Lagerung der Linse (1) ausgebildet sind und dass sie zur Montage in einer vorzugsweise zylindrischen Bohrung (8) im Zylinderkopf (9) eines Verbrennungsmotor ausgebildet ist.

14. Aufnahme nach Anspruch 13 umfassend einen Hohlzylinder (10) und eine am Hohlzylinder (10) lösbar befestigte, vorzugsweise aufgesteckte Hülse (11), wobei die Linse (1) zwischen Hohlzylinder (10) und aufgesteckter Hülse (11) anordenbar ist.

15. Aufnahme nach Anspruch 14, **dadurch gekennzeichnet, dass** der Hohlzylinder (10) an einem Ende Sitzflächen (6) aufweist, die komplementär zu einem Abschnitt des asphärischen Bereichs (3) der Linse (1) ausgebildet sind und die Hülse (11) Sitzflächen (7) aufweist, die komplementär zu einem Abschnitt der sphärischen Grundform (2) der Linse (1) ausgebildet sind.

16. Zylinderkopf mit einer Aufnahme (12) nach einem der Ansprüche 13 bis 15, wobei in der Aufnahme (12) eine Linse (1) nach einem der Ansprüche 1 bis 9 angeordnet ist.

17. Zylinderkopf nach Anspruch 16, **dadurch gekennzeichnet, dass** die Linse (1) ein Brennraumfenster bildet.

18. Zylinderkopf nach Anspruch 17, **dadurch gekennzeichnet, dass** die Linse (1) über die Zylinderkopfunterseite hervorsteht.
